# EUROPÄISCHE PATENTSCHRIFT

(11) **EP 1 106 011 B1**
(45) Veröffentlichungstag und Bekanntmachung des Hinweises auf die Patenterteilung: **18.07.2007**
(21) Anmeldenummer: 99952421.8
(22) Anmeldetag: 18.08.1999
(51) Int. Cl.: H04M 17/00, H04M 3/48, H04Q 7/38

(54) **VERFAHREN ZUR ECHTZEITVERGEBÜHRUNG VON TELEKOMMUNIKATIONSVERBINDUNGEN BEI AUFENTHALT EINES TEILNEHMERS AUSSERHALB SEINES HEIMATNETZES**
METHOD FOR THE REAL-TIME BILLING OF TELECOMMUNICATION LINKS WHEN A SUBSCRIBER IS LOCATED OUTSIDE HIS HOME NETWORK
PROCEDE DE TARIFICATION EN TEMPS REEL DE LIAISONS DE TELECOMMUNICATION LORSQU'UN ABONNE SE TROUVE A L'EXTERIEUR DE SON RESEAU D'ATTACHE

(30) Priorität: 19.08.1998 DE 19837460
(43) Veröffentlichungstag der Anmeldung: 13.06.2001
(73) Patentinhaber: T-Mobile Deutschland GmbH, 53227 Bonn (DE)
(72) Erfinder: HAKE, Jens, D-09240 Kemtau (DE); THELEN, Jörg, D-53227 Bonn (DE)
(74) Vertreter: Riebling, Peter
(86) Internationale Anmeldenummer: PCT/DE1999/002569
(87) Internationale Veröffentlichungsnummer: WO 2000/011861

(56) Entgegenhaltungen:
- WO-A-97/19548
- WO-A-98/34393
- WO-A-98/34425
- US-A- 5 826 185

## Beschreibung

Die Erfindung betrifft ein Verfahren zur Echtzeitvergebührung von Telekommunikationsverbindungen bei Aufenthalt eines Teilnehmers außerhalb seines Heimatnetzes nach dem Oberbegriff des Patentanspruchs 1.

Zur Zeit in sind Mobilfunknetzen im wesentlichen zwei Verfahren zur Echtzeitvergebührung von Telekommunikationsverbindungen zu unterscheiden. Diese basieren auf einer Implementierung von vorausbezahlten Zugangsberechtigungen, sogenannten Pre-Paid-Teilnehmerverhältnissen, die jedoch nicht für den Einsatz außerhalb des Heimatnetzes, in dem die Gebührenabrechnung erfolgt, einsetzbar sind. Dies ist im Fall von modernen, international standardisierten Mobilfunknetzen mit gegenseitigem Abkommen für das sogenannte "Roaming" jedoch wünschenswert.

Zum einen ist es bekannt, eine Echtzeiterfassung der anfallenden Verbindungsentgelte in entsprechenden Einrichtungen des Telekommunikationsnetzes vorzunehmen, sowie die Unterbrechung der aktuellen und weiteren Verbindungen, wenn ein vorausbezahltes Guthaben aufgebraucht ist. Dieses Verfahren erlaubt jedoch nicht den Einsatz außerhalb des Heimatnetzes des Teilnehmers. Der Grund dafür ist, daß zwischen den verschiedenen Netzen kein Echtzeitaustausch von Gebührendaten vorgesehen ist, da die einen zu hohen administrativen Aufwand zur folge haben würde. Dadurch kann die Zeit zwischen Anfallen der Gebühren und Übermittlung der Gebührendaten und Abrechnung der Gebühren im Heimatnetz zu nicht durch ein Gebührenguthaben abgedeckten Verbindungen genutzt werden.
Hierzu offenbart die WO-A-98 34425 ein Verfahren zur Echtzeitvergebührung von ankommenden Verbindungen zu Teilnehmern, die sich in einem Roamingnetz aufhalten. Die Vergebührung erfolgt durch eine Echtzeitsteuerung von Teilnehmerberechtigungsprofilen im Heimatregister des Heimatnetzes und Übermittlung der Teilnehmerdaten an das Roamingnetz. Wird vom Heimatnetz ein Anruf für einen sich in einem Roamingnetz aufhaltenden Teilnehmer empfangen, wird geprüft, ob der Teilnehmer zum Roaming berechtigt ist und über ein ausreichendes Guthaben verfügt, bevor die Verbindung aufgebaut wird. Eine Echtzeitvergebührung von abgehenden Verbindungen aus dem Roamingnetz ist nicht möglich.

Zum anderen ist es bekannt, daß eine Echtzeiterfassung der anfallenden Verbindungsentgelte im Endgerät erfolgt, was jedoch durch versehentlich oder absichtlich fehlerhafte Endgerätesoftware unterlaufen werden kann.

Der Erfindung liegt die Aufgabe zugrunde, ein Verfahren zur Echtzeitvergebührung von Telekommunikationsverbindungen bei Aufenthalt eines Teilnehmers außerhalb seines Heimatnetzes vorzuschlagen, welches einfach und kostengünstig zu realisieren ist und ohne oder mit nur geringfügigen Änderungen an bestehenden Netzwerkeinrichtungen auskommt.

Gelöst wird diese Aufgabe durch die kennzeichnenden Merkmale des Patentanspruchs 1.

Die Erfindung beruht darauf, daß der Aufbau der Telekommunikationsverbindung und die Echtzeitgebührenerfassung durch das Heimatnetz erfolgen, auch wenn sich der Teilnehmers außerhalb seines Heimatnetzes aufhält.

Bei einem Aufenthalt eines Teilnehmers außerhalb seines Heimatnetzes, z.B. im Ausland, ist durch eine entsprechende Konfiguration des Teilnehmerverhältnisses kein direkter Aufbau einer Telekommunikationsverbindung über das fremde Telekommunikationsnetz möglich. Dazu ist im Teilnehmerverhältnis z.B. eine Rufsperre für abgehende Rufe außerhalb des Heimatnetzes konfiguriert.

Wird nun bei Aufenthalt eines Teilnehmers im Ausland eine Verbindung gewünscht, erfolgt zunächst die Übermittlung eines Nachrichtentelegramms an ein spezielles Netzelement im Heimatnetz des Teilnehmers, in welchem zumindest die Zielrufnummer der gewünschten Verbindung sowie die Identität des rufenden Teilnehmers übermittelt wird.
In einer bevorzugten Ausführungsform besteht das Datentelegramm aus einer Kurznachricht die mittels Short Message Service (SMS) versandt wird.
Es ist jedoch auch vorgesehen, dem speziellen Netzelement eine bestimmte Rufnummer zuzuordnen, die vom Teilnehmer angewählt werden kann. Im Dialogverfahren wird dann die Rufnummer des gewünschten Gesprächsteilnehmers vom Netzelement abgefragt und kann über die Tastatur des Endgerätes eingegeben werden.

Das spezielle Netzelement baut nach Prüfung der Daten und des zugeordneten aktuellen Gebührenguthabens die Verbindungen zum angerufenen und rufenden Teilnehmer auf. In einer bevorzugten Ausführungsform besteht das spezielle Netzelement aus einem Rückrufserver, der gleichzeitig auch für die Überwachung der vorausbezahlten Gebühren zuständig sein kann (Pre-Paid-Server).

Da alle kostenverursachenden Verbindungen im Heimatnetz aufgebaut werden, kann hier in gewohnter Weise eine Echtzeitüberwachung der Verbindungsentgelte erfolgen und die Verbindung abgebrochen werden, falls das Guthaben aufgebraucht ist.

Ist ein besonderer Schutz vor Mißbrauch der übermittelten Daten gewünscht, kann die Übertragung der Daten durch eine Applikation auf dem Teilnehmeridentitätsmodul (z.B. SIM) unter Verwendung eines geeignetsten kryptographischen Verfahrens erfolgen. Die Abwicklung der erforderlichen Protokolle erfolgt durch das Teilnehmeridentitätsmodul, welches auch die übliche Identifizierung des Teilnehmers gegenüber dem Netz durchführt. So ist sichergestellt, daß Unbefugte nicht auf Kosten anderer Teilnehmer telefonieren können.

Der wesentliche Vorteil der Erfindung liegt darin, daß die Initiierung und Kontrolle der kostenverursachenden Verbindungen immer durch Netzelemente im Heimatnetz erfolgt, auch wenn der Teilnehmer sich in einem fremden Telekommunikationsnetz befindet.

Ferner besteht der Vorteil, daß eine Übertragung von gebührenrelevanten Informationen durch Ende-zu-Ende verschlüsselte Nachrichtenübertragung erfolgen kann, unter Verwendung von kryptographischen Schlüsseln, deren Vergabe in der Kontrolle des Heimatnetzbetreibers liegt.

Ein weiterer Vorteil liegt darin, daß dadurch die verschlüsselte Übermittlung der Daten ein Mißbrauch von Teilnehmerverhältnissen durch unbefugte Personen unterbunden wird. Es ist dritten Personen nicht möglich auf Kosten des berechtigten Teilnehmers Gespräche aus dem In- und Ausland zu führen.

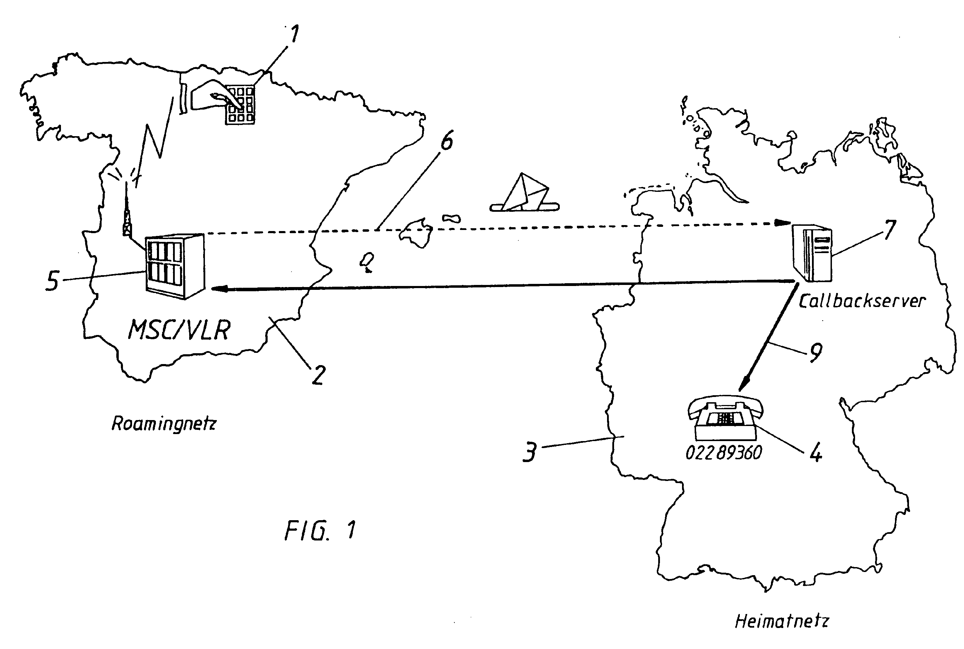

Nachfolgend wird die Erfindung anhand eines Ausführungsbeispiels unter Bezugnahme auf eine Zeichnungsfigur näher erläutert. Dabei gehen aus der Zeichnung und ihrer Beschreibung weitere Merkmale und Vorteile der Erfindung hervor.

Die Zeichnungsfigur 1 zeigt als Beispiel einen Mobilfunkteilnehmer 1, der sich im Bereich eines fremden Mobilfunknetzes 2 außerhalb seines Heimatmobilfunknetzes 3 befindet. Die Mobilfunknetze 2 und 3 sind z.B. Mobilfunknetze nach dem GSM-Standard. Es wird vorausgesetzt, daß zwischen den Betreibern der Mobilfunknetze 2 und 3 ein Roaming-Abkommen besteht. Der Mobilfunkteilnehmer 1 wünscht nun eine Gesprächsverbindung zu einem beliebigen Teilnehmer 4, der z.B. unter der Rufnummer 02289360 zu erreichen ist. Dazu muss sich der Teilnehmer 1 zunächst im fremden Mobilfunknetz 2 einbuchen und wird von der zuständigen Mobilvermittlungsstelle 5 bedient. Erfindungsgemäß ist es nun dem Mobilfunkteilnehmer 1 nicht möglich, direkt eine Gesprächsverbindung zum Teilnehmer 4 aufzubauen. Der Teilnehmer kann jedoch z.B. mittels einer Kurznachricht über den Short Message Service SMS ein Datentelegramm 6 an einen im Heimatnetz 3 angeordneten Rückrufserver 7 senden. Das Datentelegramm enthält dabei zumindest die Zielrufnummer (02289360) des Teilnehmers 4 und die Rufnummer (+49171xxxxxxx) des rufenden Teilnehmers 1. Die Verwendung des Short Message Service hat den Vorteil, daß in der Kurznachricht automatisch die Identität des rufenden Teilnehmers 1 übermittelt wird.

Der Rückrufserver 7 ist in bekannter Weise in das Heimatnetz 3 eingebunden und ist als Standardkomponente ausgebildet. Der Rückrufserver 7 extrahiert aus dem empfangenen Datentelegramm 6 die Rufnummer des gerufenen und des rufenden Teilnehmers und initiiert darauf eine Verbindung 8 zum rufenden Teilnehmer 1, d.h. dem Absender des Datentelegramms 6 und stellt eine Verbindung 9 zur gewünschten Zielrufnummer, d.h. zum Teilnehmer 4, her. Nun ist eine Gesprächsverbindung zwischen dem Mobilfunkteilnehmer 1 und dem Teilnehmer 4 aufgebaut, die vollständig vom Heimatnetz 3 initiiert und kontrolliert wird. In gewohnter Weise kann nun eine Echtzeitüberwachung der Verbindungsentgelte für die Verbindungen 8 und 9 erfolgen, wobei die Verbindungsentgelte dann direkt vom Heimatnetz 3 abgerechnet und vom vorausbezahlten Guthaben des Teilnehmers 1 abgebucht werden können.

## Patentansprüche

1. Verfahren zur Echtzeitvergebührung von Telekommunikationsverbindungen zwischen einem sich außerhalb seines Heimatnetzes (3) im Bereich eines fremden Mobilfunknetzes aufhaltenden, rufenden Teilnehmer (1) und einem angerufenen Teilnehmer (4),
**dadurch gekennzeichnet,**
**daß** der Aufbau der Telekommunikationsverbindung zwischen dem rufenden Teilnehmer (1) und dem angerufenen Teilnehmer (4) und die Echtzeitvergebührung durch das Heimatnetz (3) erfolgen.

2. Verfahren nach Anspruch 1,
**dadurch gekennzeichnet,**
**daß** abgehende Verbindungen bei Aufenthalt des Teilnehmers (1) außerhalb seines Heimatnetzes (3) gesperrt sind.

3. Verfahren nach Anspruch 1 oder 2,
**dadurch gekennzeichnet,**
**daß** bei einem eintretenden Verbindungswunsch des rufenden Teilnehmers (1) vom rufenden Teilnehmer zunächst ein Nachrichtentelegramm (6), das zumindest die gewünschte Zielrufnummer des gerufenen Teilnehmers (4) und die Identität des rufenden Teilnehmers (1) enthält, an ein spezielles Netzelement (7) im Heimatnetz (3) gesendet wird, und das spezielle Netzelement (7) nach Prüfung der im empfangenen Nachrichtentelegramm (6) enthaltenen Daten die Verbindungen (8, 9) zum angerufenen und rufenden Teilnehmer (4, 1) aufbaut.

4. Verfahren nach einem der Ansprüche 1-3,
**dadurch gekennzeichnet,**
**daß** das Nachrichtentelegramm (6) als Kurznachricht (SMS) abgefasst und versandt wird.

5. Verfahren nach einem der Ansprüche 1-4,
**dadurch gekennzeichnet, daß** das spezielle Netzelement (7) nach Prüfung des den Daten zugeordneten aktuellen Gebührenguthabens die Verbindungen (8, 9) zum angerufenen und rufenden Teilnehmer (4, 1) aufbaut

6. Verfahren nach einem der Ansprüche 1-5,
**dadurch gekennzeichnet,**
**daß** das spezielle Netzelement in Form eines Rückrufservers (7) mit Anbindung an Intelligente Netzwerkfunktionen realisiert ist.

7. Verfahren nach einem der Ansprüche 1-6,
**dadurch gekennzeichnet,**
**daß** die Gebührenerfassung der Verbindungen (8,9) durch eine IN online-Vergebührung erfolgt.

## Claims

1. Method for real-time charging for telecommunications links between a calling subscriber (1) who is outside his home network (3) within the range of an external mobile telephone network, and a called subscriber (4), **characterised in that** establishment of the telecommunications link between the calling subscriber (1) and the called subscriber (4), and real-time charging are effected by the home network (3).

2. Method according to claim 1, **characterised in that** outgoing links are blocked while the subscriber (1) is outside his home network (3).

3. Method according to claim 1 or 2, **characterised in that**, in case of an incoming wish by the calling subscriber (1) to connect, first a message telegram (6) containing at least the desired target telephone number of the called subscriber (4) and the identity of the calling subscriber (1) is sent by the calling subscriber (1) to a special network element (7) in the home network (3), and after examination of the data contained in the message telegram (6) received, the special network element (7) establishes the links (8, 9) to the called and calling subscribers (4, 1).

4. Method according to one of claims 1-3, **characterised in that** the message telegram (6) is drawn up and sent as a short message (SMS).

5. Method according to one of claims 1-4, **characterised in that**, after examination of the current charge credit balance allocated to the data, the special network element (7) establishes the links (8, 9) to the called and calling subscribers (4, 1).

6. Method according to one of claims 1-5, **characterised in that** the special network element is realised in the form of a callback server (7) with a connection to intelligent network functions.

7. Method according to one of claims 1-6, **characterised in that** call accounting of the links (8, 9) is effected by IN online charging.

## Revendications

1. Procédé de tarification en temps réel de liaisons de télécommunication entre un abonné appelant (1) qui se trouve en dehors de son réseau de rattachement (3), dans la zone d'un réseau mobile étranger, et un abonné appelé (4),
**caractérisé en ce que** l'établissement de la liaison de télécommunication entre l'abonné appelant (1) et l'abonné appelé (4) et la tarification en temps réel se font grâce au réseau de rattachement (3).

2. Procédé selon la revendication 1, **caractérisé en ce que** les liaisons sortantes sont interdites si l'abonné (1) se trouve en dehors de son réseau de rattachement (3).

3. Procédé selon la revendication 1 ou 2, **caractérisé en ce que** lorsque l'abonné appelant (1) souhaite établir une liaison, il envoie tout d'abord à un élément de réseau spécial (7) prévu dans le réseau de rattachement (3) un message-télégramme (6) qui contient au moins le numéro d'appel d'arrivée souhaité de l'abonné appelé (4) et l'identité de l'abonné appelant (1), et l'élément de réseau spécial (7), après vérification des données contenues dans le télégramme (6) reçu, établit les liaisons (8, 9) avec les abonnés appelé et appelant (4, 1).

4. Procédé selon l'une des revendications 1 à 3, **caractérisé en ce que** le message-télégramme (6) est rédigé et envoyé sous la forme d'un message court (SMS).

5. Procédé selon l'une des revendications 1 à 4, **caractérisé en ce que** l'élément de réseau spécial (7), après vérification du crédit de communication actuel affecté aux données, établit les liaisons (8, 9) avec les abonnés appelé et appelant (4, 1).

6. Procédé selon l'une des revendications 1 à 5, **caractérisé en ce que** l'élément de réseau spécial est réalisé sous la forme d'un serveur de rappel automatique (7) avec une connexion à des fonctions de réseau intelligentes.

7. Procédé selon l'une des revendications 1 à 6, **caractérisé en ce que** les liaisons (8, 9) sont comptabilisées grâce à une tarification en ligne par Internet.
